# EUROPEAN PATENT APPLICATION

(11) **EP 4 800 455 A1**
(43) Date of publication of application: **02.09.2026**
(21) Application number: 26158833.9
(22) Date of filing: 16.02.2026
(51) Int. Cl.: G02B 6/44, H01B 9/00

(54) **POWER CABLE AND MANUFACTURING METHOD THEREOF**

(30) Priority: 27.02.2025 IT 202500003999
(71) Applicant: Prysmian S.p.A., 20126 Milan (IT)
(72) Inventor: CESCHIAT, Davide, 20126 Milano (MI) (IT); ALEXANDRE, Fabrice, 20126 Milano (MI) (IT); ORIGO, Graziella, 20126 Milano (MI) (IT); BORMAN, Peter Cornelis, 20126 Milano (MI) (IT); BENARD, Laurent, 89100 Paron (FR); CONSONNI, Enrico Maria, 20126 Milano (MI) (IT); DAUD, Caio, 20126 Milano (MI) (IT)
(74) Representative: Riccardi, Elisa

(57) **Abstract**

An HV, EHV or MV power cable (10) comprising at least one insulated conductive core, a metallic screen (14) surrounding the at least one insulated conductive core (12), a sheath (16) surrounding the metallic screen (14), and at least one optical fiber element (40). The optical fiber element(s) (40) is/are embedded in and surrounded by the sheath (16) in a position that is radially outward from and spaced from the metallic screen (14), helically or SZ stranded around the metallic screen (14). The optical fiber element(s) is/are dielectric and comprise(s) at least one tube surrounding one or more optical fibers, and an element jacket surrounding the tube(s).

A process for manufacturing the HV, EHV or MV power cable.

## Description

### TECHNICAL FIELD

The present disclosure relates to a power cable.

The present disclosure further relates to a process for manufacturing a power cable.

In the present disclosure and in the attached claims:
- "power cable" means a cable system including electric conductor(s) for transporting and/or distributing electrical energy, and which may include optical fiber(s);
- term "radial" means a direction extending perpendicular to a reference longitudinal axis or centerline of the cable;
- expressions "radially inner", "radially outer", "radially outward from" refer to relative positions taken along a radial direction with respect to the reference longitudinal axis or centerline of the cable, inner meaning closer to the reference longitudinal axis or centerline, and outer/outward from meaning farther away from the reference longitudinal axis or centerline;
- term "surround" and its derivatives mean "in a radially outer position with respect to", without implying any concentricity and without necessarily implying contact;
- terms "in contact", "contacting" and their derivatives mean without the interposition of any component;
- term "thickness" indicates an average size along a radial direction;
- terms "conduct", "insulate", "connect", "couple", their derivatives, and other terms that might also have a thermal or mechanical meaning are used in the electrical meaning, unless otherwise specified;
- term "conducting" means made of a material having an electrical resistivity lower than 10x10⁻⁸ Ohm·m;
- term "semiconducting" means made of a material having an electrical resistivity comprised between 0.1 and 10 Ohm·m;
- term "insulating" means made of a material having a volume resistivity of at least 1x10¹³ Ohm·cm;
- "Medium Voltage" or "MV" is used to indicate voltages in the range from 1 kV to 30-36 kV;
- "High Voltage" or "HV" is used to indicate voltages higher than 30-36 kV, i.e. it is broadly used to include "Extra High Voltage" or "EHV";
- all of the numerical magnitudes indicating amounts, quantities, percentages, and similar shall be deemed to be modified by term "about", unless otherwise indicated, and each range for which a lower and upper limit(s) are given shall be deemed to include all of the possible combinations of those limits, limits included, and all of the possible intermediate ranges, besides those specifically indicated;
- term "either" should be construed as encompassing both "the one and the other of two" and "the one or the other of two";
- the words "a" or "an" should be read to include one or at least one, and the singular also includes the plural unless it is obvious that it is meant otherwise;
- term "layer" indicates a cable element which, in cross-section, is evenly distributed about a reference longitudinal axis or centerline of the cable;
- term "sheath" indicates the outermost layer of the cable or the layer of the cable just radially internal to an armor, if an outermost armor is provided for;
- term "metallic screen" includes a metallic tape or foil layer, a metallic wire layer, a metallic braid layer, and a combination thereof.

### BACKGROUND ART

Power cables are generally used to transport or distribute electric power.

High Voltage (HV) and Extra High Voltages (EHV) cables are generally used to transport electric power from a power generating plant.

Medium Voltage (MV) cables are generally used to distribute electric power within commercial, industrial and urban residential networks.

All these cables generally include at least one insulated conductive core (namely, a conductor(s) and an insulating system thereof), which is/are surrounded by a metallic screen, which is in turn surrounded by a sheath, sometimes also termed jacket in the art.

A protective and/or strengthening structure made of various materials may also be encased within the metallic screen.

An armor may be provided, for example in the case of submarine power cables, either embedded in the sheath or external to the sheath.

The metallic screen, which is earthed or grounded during cable operation, serves to drain leakage and/or short circuit current. The metallic screen may also protect the insulating system against water.

The metallic screen may include a welded or glued metallic tape or foil screen. In some power cables, the metallic screen includes a metallic wire or braid screen for earthing and current draining, and a welded or glued metallic tape or foil screen for water protection.

The main function of the sheath is that of environmental protection against mechanical damage to the conductive core(s).

The armor, if present, protects the cable against mechanical damage during and after laying; in the case of submarine power cables, it i.a. carries the weight of the cable when laid on the seabed.

Power cables may further include an optical fiber element (sometimes named optical fiber unit), which includes one or more optical fibers.

The optical fiber element may be used, for example, for optical fiber sensing in order to monitor temperature, strain, pressure, vibrations and/or other quantities at the end of or along a path. One example application is monitoring the integrity and/or conditions of the power cable itself; another example application is in a Distributed Acoustic Sensing (DAS) listening system, e.g., as an ambient microphone.

As another example, the optical fiber element may be used, alternatively or additionally, for data communication.

Positioning of an optical fiber element in a power cable is normally radially inner to the metallic screen.

US 7,085,457 B2 discloses an electrical cable having a holding member arranged within the cable for an optic fiber, which can be used for temperature sensing and/or communications. The holding member can replace one or more strands of the cable, be placed inside an interstice of the cable, be placed in between various layers of the cable, or placed in the jacket of the cable. At least one strength member may be adjacent to and/or attached to the holding member to provide additional protection for the optic fiber.

Specifically, in a welded corrugate armor shield type high voltage conductor cable, the holding member is arranged longitudinally, so as to avoid twisting of the optical fiber, on the exterior of the corrugated welded armor, thus in direct contact therewith, and then the jacket material is extruded on the assembly to embed the holding member into the jacket material, however only partially.

The strength member is an electrically conductive material, preferably copper.

The holding member can be made from a variety of materials such as metals, composites, plastics, and/or a combination thereof, and specifically can be made of stainless steel or a combination of stainless steel and dielectric plastic. The holding member may support a tube formed from a material, such as stainless steel, composite, or plastic.

### TECHNICAL PROBLEM

Positioning of an optical fiber element in a power cable radially inner to the metallic screen may create -due to the optical fiber element causing layers of the insulating system (e.g. layers of semi-conducting and/or water swellable tape) to locally depart from a circumferential arrangement- air gaps that decrease the ampacity of the cable (e.g. by increasing the thermal resistivity), namely the maximum amount of current that it can safely carry.

Moreover, the optical fiber element is not firmly held in the intended position because of the air gap, thus it may for example kink when laying the power cable. Furthermore, those air gaps may cause some water penetration.

Regarding the cable proposed by the above mentioned US 7,085,457 B2**,** the Applicant notes that the electrically conductive strength member arranged longitudinally of the cable together with the holding member may also cause undesired electrically interference and/or an inductive voltage.

Furthermore, an optic fiber holding member arranged in contact with the metallic screen may also contribute to air gap formation.

The Applicant faced the technical problem of overcoming those drawbacks.

### SUMMARY

The Applicant has perceived that the above-mentioned problem may be solved by stranding a dielectric optical fiber element externally of and spaced from the metallic screen, within the bulk of the sheath. Such provision avoids the formation of air gaps with the above-mentioned ensuing problems, and allows to minimize any electric interference and to avoid establishment of a floating potential and/or an inductive voltage; last, the dielectric optical fiber element need not be grounded at junctions.

According to a first aspect, the present disclosure relates to a power cable comprising at least one insulated conductive core, a metallic screen surrounding the at least one insulated conductive core, a sheath surrounding the metallic screen, and at least one optical fiber element.

The at least one optical fiber element is embedded in and surrounded by the sheath in a position that is radially outward from and spaced from the metallic screen, wherein the at least one optical fiber element is helically or SZ stranded around the metallic screen. The at least one optical fiber element is dielectric and comprises at least one tube, each tube surrounding one or more optical fibers, and an element jacket surrounding the tube(s).

The Applicant has recognized that an optical fiber element arranged radially outer to the metallic screen is easy to access, with low risk of breaking when making terminations or joints.

The sheath material adheres to the contour of the optical fiber element(s) embedded therein, filling the space between the optical fiber element(s) and the metallic screen, so that there is no air gap in the power cable, and the power transmission is optimal, because of the comparatively low thermal resistivity that allows high ampacity of the cable. Moreover, the optical fiber element is firmly held in the intended position by being embedded in the sheath, without adjacent free space formed by air gaps. Furthermore, by avoiding air gaps, the power cable meets the requirements in terms of protection against water penetration.

The stranded configuration prevents that the optical fiber element is subjected to stresses when the cable is bent and allows the optical fiber element to adapt well to the cable curvature. The dielectric construction of the optical fiber element avoids electric interference; no noticeable floating potential and/or inductive voltage establishes on the optical fiber element; earthing or grounding at junctions is not necessary.

A configuration including one single tube is quite simple; a configuration including more than one tube allows a greater number of optical fibers.

The spacing between the optical fiber element(s) and the metallic screen, in a radial direction, may be for example greater than half a size, in the radial direction, of the optical fiber element(s).

Each optical fiber element may further comprise at least one strength member, surrounded by said element jacket.

A strength member(s) may perform as a ripcord, allowing easy access to the optical fiber element during installation of the power cable, besides easing manufacturing of the optical fiber element and of the overall power cable by reducing stresses on the optical fiber(s) and avoiding elongation of the optical fiber element, in turn aiding to manage the extra fiber length (EFL).

The spacing of the strength member(s) from the tube(s) may be less than a cross-size (e.g. a diameter) of the tube(s). This provision provides good performance of the strength member(s) as a ripcord.

The strength member(s) may be selected from the group comprising aramid yarn, polyester yarn, polyamide yarn, Ultra High Molecular Weight Polyethylene (UHMWPE) yarn, and combinations thereof. A strength member made of such low ductility materials perform quite well as a ripcord.

The tube(s) may be made of a material selected from the group consisting of polybutylene terephthalate (PBT), polycarbonate (PC), polyamide (PA), and any other material that doesn't adhere with the element jacket - nor with the sheath material, as well as of combinations of those materials. Such a tube prevents crushing of the optical fiber(s) contained within it and allows to remove the tube from the element jacket, and sheath when they are merged in the finished cable.

By arranging the tube(s) - and strength member(s) if provided for - side-by-side, the thickness of the optical fiber element may be kept low despite the increased number of optical fibers; or the optical fiber element may have a lower thickness, number of optical fibers being equal.

The tube(s) and strength member(s) may alternate each other. With such an arrangement, one or two strength members is/are adjacent to each tube, optimizing the above-mentioned functions of the strength members.

In an example case, there are one tube and two strength members, the tube being arranged between the two strength members. The three components are, for example, arranged side-by-side, and the element jacket forms a flat optical fiber element. This construction protects the tube during manufacturing, and further improves the ability of the strength members being used as a ripcord to provide easy access to the tube containing the optical fibers. The ripcords create a channel in the outer cable sheath through which the tube can be taken out from the sheath without risk of damaging the tube and optical fibers containing therein.

In another example case, there are two tubes and three strength members, each tube being arranged between a pair of strength members. The five components are, for example, arranged side-by-side, and the element jacket forms a flat optical fiber element.

In another example case, there are two tubes arranged side-by-side, and the element jacket forms a flat optical fiber element.

Said at least one fiber optic element may be a generally flat element. A generally flat element occupies less space in radial direction and ensures a correct orientation of tube(s) and strength member(s) in the sheath during the manufacturing of the cable.

The element jacket and the sheath may be made of materials that may merge at least partially during extrusion of the sheath. This provision further avoids any air gap formation around the optical fiber element.

In the finished power cable, the element jacket may be merged at least partially with the sheath.

For example, the element jacket and the sheath may be made with the same material. When the sheath includes a thermoplastic or other polymeric base material with additives such as and flame retardant, a UV shielding additive and/or a scratch-resistant additive, the element jacket may be made of the base material.

The one or more optical fibers may comprise one or more single mode fiber(s) and/or one or more multimode fiber(s).

The one or more optical fibers may be loosely accommodated within the tube.

The one or more optical fibers may alternatively be tight buffered within the tube, namely each optical fiber is directly coated with a respective protective buffer layer.

Each tube may further comprise a gel material, such as a hydrocarbon or silicon based gel and/or a gel capable of absorbing hydrogen, and/or one or more water swellable yarn(s).

The lay length or pitch of the optical fiber element may range between one to ten times a diameter of the power cable.

The metallic screen may include a welded or glued metallic tape or foil screen.

Alternatively, the metallic screen may include a wire layer or braid layer for earthing or grounding and for current draining, and a welded or glued metallic tape or foil for water protection.

A protective and/or strengthening structure, made of various materials, may be encased within the metallic screen.

An armor may be provided, for example in the case of submarine power cables, either embedded in the sheath or external to the sheath.

According to a second aspect, the present disclosure relates to a method for manufacturing a power cable, comprising:
surrounding at least one tube including one or more optical fibers with an element jacket to form a dielectric optical fiber element,
forming at least one insulated conductive core,
surrounding the at least one insulated conductive core with a metallic screen,
helically or SZ stranding the dielectric optical fiber element around the metallic screen in a position that is radially outward and spaced from the metallic screen, and
extruding a sheath surrounding the metallic screen and embedding and surrounding the dielectric optical fiber element.

### BRIEF DESCRIPTION OF DRAWINGS

Further features and advantages of the present disclosure will be more clearly apparent from the following detailed disclosure of some embodiments thereof, made with reference to the attached drawings, wherein:
- FIG. 1 diagrammatically shows a perspective and partly broken away view of an example of a power cable of according to the present disclosure,
- FIG. 1A is an enlarged detail of FIG. 1,
- FIG. 2 diagrammatically shows a cross-section of an example of a power cable according to the present disclosure, and
- FIGs. 3-7 diagrammatically show a cross-section of examples of an optical fiber element of a power cable according to the present disclosure.

### DETAILED DESCRIPTION OF EMBODIMENTS

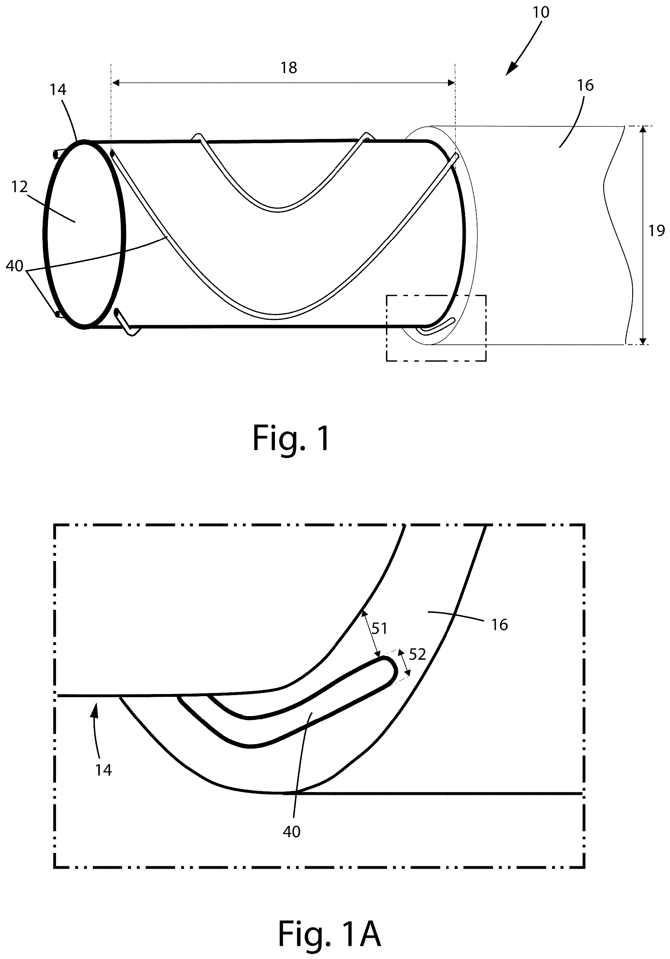

In **FIG. 1** a power cable 10 is shown, in a schematic perspective and partly broken away view, not to scale, and only by way of an example of a power cable according to the subject-matter disclosed herein.

The power cable 10 comprises at least one insulated conductive core 12 (details whereof are not shown in Fig. 1), a metallic screen 14 surrounding the insulated conductive core 12, and a sheath 16, sometimes also named jacket in the art, surrounding the metallic screen 14. The power cable 10 further comprises one or more optical fiber elements 40, four in the example shown.

The optical fiber elements 40 are embedded in and surrounded by the sheath 16, in a position that is radially outward from and spaced from the metallic screen 14 (thus further radially outward from the insulated conductive core 12). This may be better appreciated by reference to the enlargement of **FIG. 1A****.**

The spacing 51 between the optical fiber elements 40 and the metallic screen 14, in a radial direction, is for example greater than half a size 52, in the radial direction, of the optical fiber elements 40.

The optical fiber elements 40 are arranged in the bulk of the sheath 16. The optical fiber elements 40 are radially within the thickness of the sheath 16.

The optical fiber elements 40 are, in the example shown, evenly circumferentially distributed about the power cable 10.

While the optical fiber elements are four in the example cable shown, in a power cable according to the subject-matter disclosed herein there may be more than four or less than four optical fiber elements, down to a single optical fiber element. The number of optical fiber elements may vary, for example, according to customer and/or application specifications.

The number of optical fiber elements may be limited by the diameter of the power cable and/or by the sheath material and/or by the overall amount of sheath material still allowed despite of the presence of the optical fiber elements. Mechanical constraints and the total weight of the cable may also impact on the number of optical fiber elements.

The optical fiber elements may be unevenly circumferentially distributed about the power cable.

The optical fiber elements 40 may be SZ-stranded, namely arranged along a periodically reversed helix, around the metallic screen 14 that surrounds the insulated conductive core 12 as shown. Alternatively, they may be helically stranded. The lay length 18 of the optical fiber elements 40, namely the distance required to complete one revolution of optical fiber element 40 around the longitudinal axis of the power cable 10, may range, for example, between one to ten times the diameter 19 of the power cable 10. The lay length corresponds to the pitch in the case of a helical arrangement.

The metallic screen 14 is generally tube-shaped and may be made e.g. of a folded and welded lead, aluminum or copper tape or foil. Alternatively, the metallic screen 14 may include a metallic wire or braid screen. Alternatively, the metallic screen 14 may include a radially outer folded and welded lead, aluminum or copper tape or foil, and a radially inner metallic wire or braid screen.

The sheath 16 may be made, e.g., of a thermoplastic polymer material such as, for example, polyethylene (PE), or Low Smoke Halogen Free (LOSH) thermoplastic polymer material. The thermoplastic material may form one or more sheath layers, and a reinforcement layer or armor (not shown) may further be included between sheath layers, or surrounding the sheath. The reinforcement layer may comprise metal strands, or glass or aramid yarns. An outer sheath layer may include a flame retardant, a UV shielding additive and/or a scratch-resistant additive.

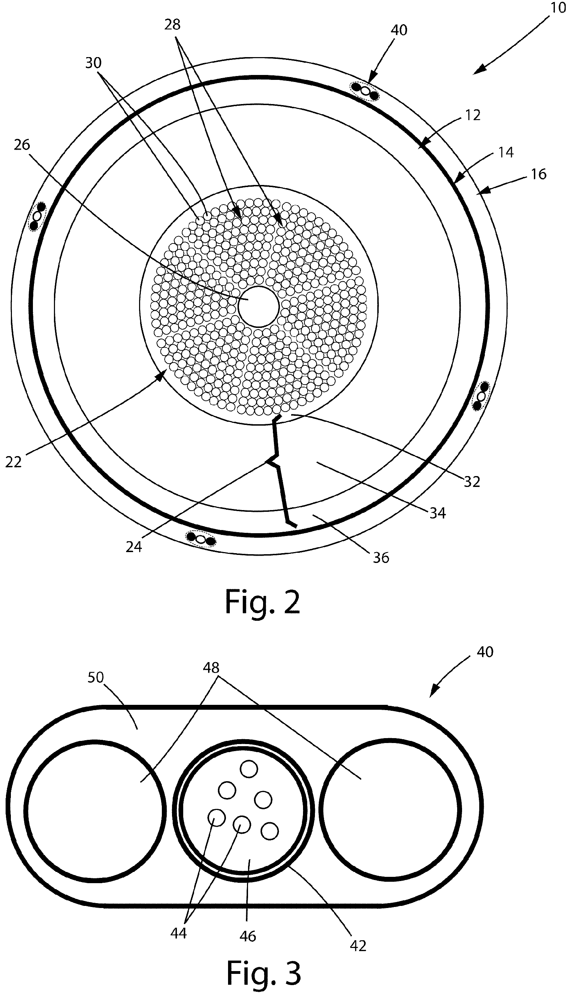

Reference is now made also to **FIG. 2****,** which shows example power cable 10 in greater detail, still schematically, in cross-section and not to scale.

The example power cable 10 shown comprises one single insulated conductive core 12, which includes a conductor 22, and an insulating system 24 thereof. The conductor 22 may be made, e.g., of copper or aluminum.

The conductor 22 comprises, in the example cable shown, a central conductor rod 26 and a plurality of bundles 28 (six in the example shown) of conductor wires 30. The bundles 28 of conductor wires 30 may be SZ-stranded around the central conductor rod 26. Alternatively, they may be helically stranded. The conductor wires 30 of each bundle 28 may be twisted together.

The insulating system 24 comprises, in the example shown, a radially inner semiconducting layer 32, an intervening insulating layer 34 (surrounding and contacting the radially inner semiconducting layer 32), and a radially outer semiconducting layer 36 (surrounding and contacting the intervening insulating layer 34). The semiconducting layers 32, 36 may be formed of wrapped semiconducting tape.

Reference is now made also to **FIG. 3****,** which diagrammatically shows an example of an optical fiber element for a power cable according to the present disclosure in greater detail, still schematically, in cross-section and not to scale.

The optical fiber element 40 includes a tube 42 that contains one or more optical fibers 44, six in the example shown. The optical fibers 44 are omitted from FIG. 2 for the sake of clarity. The tube 42 is depicted with a round cross-section, however it may assume an oblong, e.g. oval or elliptic cross-section when the optical fiber element 40 is embedded in the sheath 16 due to the pressure acting thereonto during manufacture of the sheath 16. Or, the tube 42 may be manufactured with an oblong, e.g. oval or elliptic cross-section.

Each optical fiber 44 may be for example a single mode optical fiber or a multimode optical fiber, comprising a glass core and cladding and one or more coating layers surrounding the optical fiber. Each optical fiber may have diameter of about 250 µm, or about 200 µm. Both a single mode optical fiber(s) and a multimode optical fiber(s) may be contained in tube 42.

The number and/or type of optical fibers 44 in each optical fiber element 40 need not be the same.

The optical fibers 44 may be loosely contained in the tube 42. The empty space in the tubes 42 may be filled with a gel material 46 and/or accommodate one or more water swellable yarn(s). The gel may be for example a hydrocarbon or silicon based gel and/or a gel capable of absorbing hydrogen.

In some embodiments the optical fiber(s) may be tight buffered with a buffer layer directly surrounding the coating of the optical fiber. Such tight buffered optical fibers may have a diameter of about 900 µm and the buffer layer may comprise acrylate or a thermoplastic material such as polyvinyl chloride (PVC), polyamide, polyethylene (PE), polybutylene terephthalate (PBT) or thermoplastic elastomer (TPE).

How the optical fibers 44 are arranged may differ among the optical fiber elements 40.

The optical fiber element 40 further includes, in the example shown, two strength members 48.

The tube 42 is arranged between the two strength members 48.

The optical fiber element 40 further includes an element jacket 50, which surrounds the tube 42 and the strength members 48.

The optical fiber element 40 is generally flat in the example shown.

Element jacket 50 may be made, e.g., of a thermoplastic polymer material such as, for example, polyethylene (PE), or Low Smoke Halogen Free (LOSH) thermoplastic polymer material. Alternatively, element jacket 50 may be made of an elastomeric material or a cross-linked material.

Element jacket 50 may be extruded about the assembly of tube 42 and strength members 48.

Element jacket 50 may be made of the same material as sheath 16, or as a base material of sheath 16, or of a material so similar to that of the sheath 16, so that element jacket 50 and sheath 16 may merge at least partially during extrusion of sheath 16. The contour of the element jacket 50 in FIG. 2 is shown in a dotted line to diagrammatically indicate that the element jacket 50 may be merged at least partially with the sheath 16 in the finished power cable 10.

By allowing the element jacket 50 to merge with the sheath 16, any formation of air gaps around the optical fiber element 40 is avoided to an even higher degree.

Tube 42 may be made of a material selected from the group consisting of polybutylene terephthalate (PBT), polycarbonate (PC), polyamide, or any other suitable material that doesn't adhere with the element jacket material, nor with the sheath material when the latter merge, and that prevents crushing of the optical fibers 44 contained within tube 42 during manufacture of the optical fiber element 40, notably while extruding element jacket 50, while laying the optical fiber element 40 and extruding the sheath 16 during manufacture of the power cable 10, as well as while the power cable 10 is manipulated and laid, e.g. when splicing an end thereof for making terminations or joints.

The two strength members 48 may be slightly spaced from the tube 42 as shown. The spacing allows the element jacket 50 to flow in between the three components during extrusion, thus contributing to maintain a well-defined shape of the optical fiber element 40 upon curing/hardening. However, either strength member 48 may alternatively be in contact with the tube 42.

The strength members 48 may be, for example, aramid yarns, polyester yarns, polyamide yarns, Ultra High Molecular Weight Polyethylene (UHMWPE) yarns, or yarns of any suitable material not very ductile.

The strength members 48 allow the optical fiber element 40 to be safely manipulated to strand it around the metallic screen 14 surrounding the isolated conductive core 12 (or the assembly of isolated conductive cores). The strength members 48 also avoid elongation of the optical fiber element 40, in turn aiding to manage the extra fiber length (EFL), as well as reduce stresses on the optical fiber(s) 44.

Strength members 48 may also perform as a ripcord, easing access to the optical fiber element 40 during installation of the power cable 10, also thanks to the helically stranded or SZ-stranded configuration with ensuing inclination of the optical fiber element 40 with respect to the axial direction of the power cable 10.

The performance as a ripcord is better when the spacing of the strength member(s) 48 from the tube 42 is less than a cross-size (e.g. a diameter) of the tube 42.

It is emphasized that all the materials mentioned above for the components of the optical fiber element are dielectric.

The structure of an optical fiber element according to the present disclosure may depart even sensibly from that shown in FIG. 3.

The optical fiber element may include more than one tube, for example two tubes, for accommodating optical fiber(s).

In case there are more than one tube in one optical fiber element, the number and/or type of optical fibers in each tube need not be the same.

An optical fiber element for a power cable according to the present disclosure may include less than two or more than two strength member(s), and may also be free of any strength member.

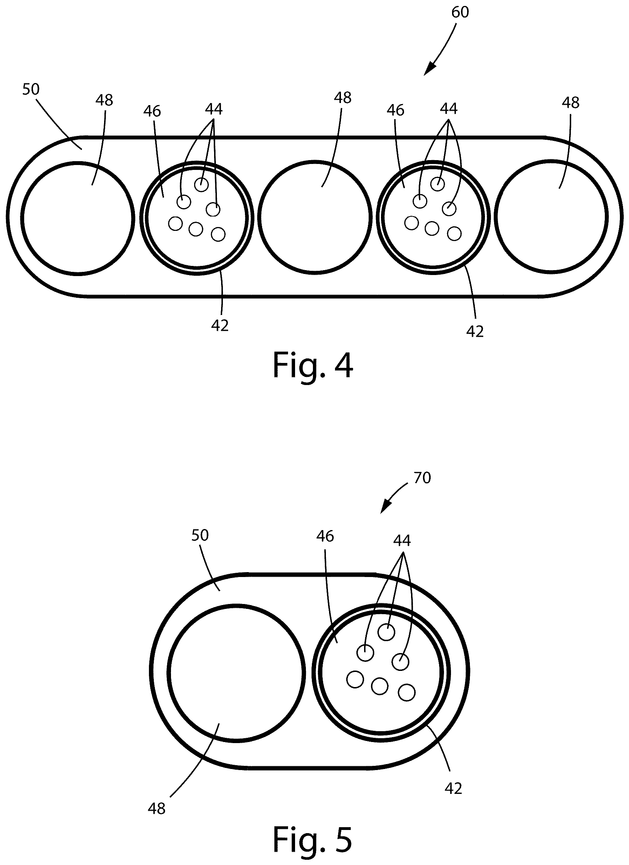

For the sake of further illustration only, **FIGs. 4-7** diagrammatically show a few other, not-exhausting examples of an optical fiber element for a power cable according to the present disclosure, schematically, in cross-section and not to scale.

Optical fiber element 60 of **FIG. 4** comprises two tubes 42 accommodating optical fiber(s) 44, and three strength members 48. The tubes 42 and strength members 48 are arranged side-by-side. The tubes 42 and strength members 48 alternate each other.

Optical fiber element 70 of **FIG. 5** comprises one tube 42 accommodating optical fiber(s) 44, and one strength member 48. The tube 42 and strength member 48 are arranged side-by-side.

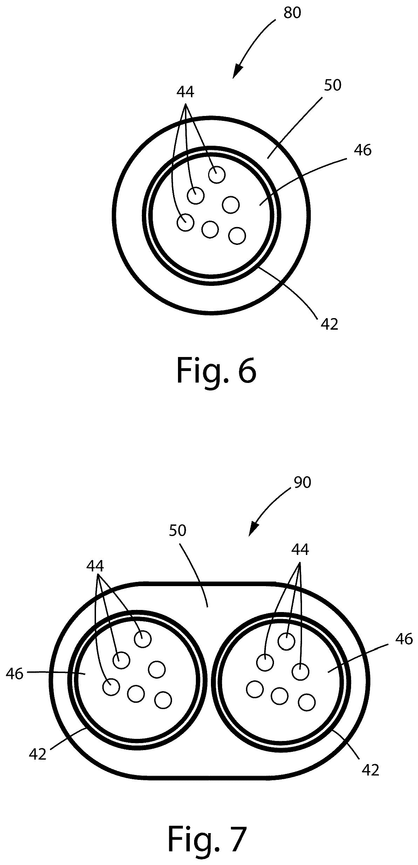

Optical fiber element 80 of **FIG. 6** just comprises one tube 42 accommodating optical fiber(s) 44. Optical fiber element 80 does not include any strength member.

Optical fiber element 90 of **FIG. 7** just comprises tubes 42 accommodating optical fiber(s) 44, two tubes 42 in the example. Optical fiber element 80 does not include any strength member. The tubes 42 are arranged side-by-side.

The above discussed characteristics, options and variations regarding the optical fiber element 40 of FIG. 3 apply to each optical fiber element 60, 70, 80, 90.

The insulated conductive core 12 may depart even sensibly from that shown in FIG. 2. Some variants are now disclosed, still by way of an example only.

The conductor 22 may include more or less than six bundles 28 of conductor wires 30, including being formed by a single bundle of conductor wires 30.

The conductor 22 may include one or more solid conductive rods, instead of the bundles 28 of conductor wires 30.

The central conductive rod 26 may be lacking.

The insulated conductive core 12 may include one or more strengthening member(s).

A water-swellable material may be further provided between the conductor wires 30. For example, the water-swellable material may include a water swellable gel.

A bedding may be provided to fill gaps among conductor wires 30 and conductor rod 26 and/or between the strengthening member(s) and the conductor wires or rods.

The insulating system 24 of the insulated conductive core 12 may also depart even sensibly from that shown.

The power cable 10 may include more than one single insulated conductive core 12, for example two (bipolar cable) or three (tripolar cable), or more than three (multipolar or multi-core cable) insulated conductive cores.

The above discussed characteristics, options and variations regarding the single insulated conductive core 12 of FIG. 2 apply to each insulated conductive core, *mutatis mutandis.*

Each single insulated conductive core may further include an individual metallic screen, additional to metallic screen 14 surrounding the plurality of insulated conductive cores as a whole.

The plurality of insulated conductive cores may be stranded together, e.g. S-Z stranded, or they may be laid parallel to each other, e.g. in a trefoil configuration.

Each insulated conductive core may be provided with its own central strength member (CSM) or off-axis strengthening member(s), in addition to or as an alternative to a shared CSM or shared off-axis strengthening member(s).

A semiconducting layer and/or a water-swellable layer may be provided around the insulated conductive cores assembly.

A power cable 10 according to the present disclosure may be manufactured in several ways.

For example, a manufacturing method involves forming at least one dielectric optical fiber element (reference is made to optical fiber element 40 below just by way of an example). This make take place, for example, by providing one or more tube(s) 42 accommodating optical fiber(s) 44, and possibly one or more strength member(s) 48, and extruding element jacket 50 surrounding those components. In order to obtain a flat dielectric optical fiber element 40, forming the or each dielectric optical fiber element 40 may include, for example, aligning a tube 42 or more tubes 42, optionally with one or more strength members 48, and extruding element jacket 50 surrounding the aligned components.

The manufacturing method further involves forming at least one insulated conductive core 12 in any conventional manner.

The manufacturing method further involves surrounding the insulated conductive core 12, or an assembly of a plurality of insulated conductive cores arranged in a trefoil, flat, twisted, helically stranded or SZ-stranded configuration, with a metallic screen 14. This may take place, for example, by folding (curving) an aluminum or copper tape or foil about the insulated conductive core 12 or assembly, and welding the adjoined edges of the tape or foil.

The manufacturing method further involves helically or SZ stranding the dielectric optical fiber element(s) 40 around the metallic screen 14 in a position that is radial outward and spaced from the metallic screen 14.

The manufacturing method further involves extruding a sheath 16 about the metallic screen 14, embedding and surrounding the dielectric optical fiber element(s) 40 with the sheath 16.

As mentioned, if made of a same or similar material, the element jacket 50 of the dielectric optical fiber element(s) 40 may merge at least partly with the sheath 16 during extrusion of the latter.

During installation of the power cable 10, dielectric optical fiber element 40 may be grasped at the strength member(s) 48, if provided for, so as to provide easy access to the tube(s) 42 containing the optical fibers 44.

The optical fibers 44 integrated within the power cable 10 may be used for optical fiber sensing and/or for data transmission. For example, power cable 10 may include one or more optical fiber(s) 44 allotted to data transmission and one or more optical fiber(s) 44 allotted to optical fiber sensing.

The power cable 10 may be a cable, e.g. an underground cable, for land application or a cable for submarine application.

The power cable 10 may be an HV, EHV or MV power cable.

## Claims

1. A High Voltage, HV, Extra High Voltage, EHV, or Medium Voltage, MV, power cable (10) comprising:
at least one insulated conductive core (12),
a metallic screen (14) surrounding the at least one insulated conductive core (12),
a sheath (16) surrounding the metallic screen (14), and
at least one optical fiber element (40, 60, 70, 80, 90) embedded in and surrounded by the sheath (16) in a position that is radially outward from and spaced from the metallic screen (14), wherein the at least one optical fiber element (40, 60, 70, 80, 90) is helically or SZ stranded around the metallic screen (14), and wherein the at least one optical fiber element (40, 60, 70, 80, 90) is dielectric and comprises:
at least one tube (42), each tube (42) surrounding one or more optical fibers (44), and
an element jacket (50) surrounding the tube(s) (42).

2. The power cable (10) of claim 1, wherein said at least one optical fiber element (40, 60, 70) further comprises at least one strength member(s) (48) surrounded by said element jacket (50).

3. The power cable (10) of claim 2, wherein the tube(s) (42) and strength member(s) (48) are arranged side-by-side.

4. The power cable (10) of claim 3, wherein there are one tube (42) and two strength members (48), and the tube (42) is arranged between the two strength members (48).

5. The power cable (10) of claim 2 or 3, wherein the tube(s) (42) and strength member(s) (48) alternate each other.

6. The power cable (10) of any of the preceding claims, wherein said at least one fiber optic element (40, 60, 70, 80, 90) is a generally flat element.

7. The power cable (10) of any of the preceding claims, wherein each strength member (48) is selected from the group comprising aramid yarn, polyester yarn, polyamide yarn, Ultra High Molecular Weight Polyethylene (UHMWPE) yarn, and combinations thereof.

8. The power cable (10) of claim any of the preceding claims, wherein said at least one tube (42) is made of a material selected from the group consisting of polybutylene terephthalate (PBT), polycarbonate (PC), and polyamide (PA), and combinations thereof.

9. The power cable (10) of any of the preceding claims, wherein the element jacket (50) and the sheath (16) are made of materials capable of merging at least partially during extrusion of the sheath (16).

10. The power cable (10) of claim 9, wherein the element jacket (50) is merged at least partially with the sheath (16).

11. The power cable (10) of claim 9 or 10, wherein the element jacket (50) and the sheath (16) are made with a same material or the element jacket (50) is made with a base material of a material of which the sheath (16) is made.

12. The power cable (10) of any of the preceding claims, wherein the one or more optical fibers (44) are loosely accommodated within each tube (42).

13. The power cable (10) of any of the claims 1 to 11, wherein the one or more optical fiber(s) is tight buffered within each tube (42) by being coated with a respective protective buffer layer.

14. The power cable (10) of any of the preceding claims, wherein the lay length (18) of the optical fiber element (40, 60, 70, 80, 90) ranges between one to ten times a diameter (19) of the power cable (10).

15. A method for manufacturing a High Voltage, HV, Extra High Voltage, EHV, or Medium Voltage, MV, power cable (10), comprising:
surrounding at least one tube (42) including one or more optical fibers (44) with an element jacket (50) to form a dielectric optical fiber element (40, 60, 70, 80, 90),
forming at least one insulated conductive core (12),
surrounding the at least one insulated conductive core (12) with a metallic screen (14),
helically or SZ stranding the dielectric optical fiber element (40, 60, 70, 80, 90) around the metallic screen (14) in a position that is radially outward and spaced from the metallic screen (14), and
extruding a sheath (16) surrounding the metallic screen (14) and embedding and surrounding the dielectric optical fiber element (40, 60, 70, 80, 90).
